# EUROPEAN PATENT APPLICATION

(11) **EP 4 480 664 A1**
(43) Date of publication of application: **25.12.2024**
(21) Application number: 22927241.4
(22) Date of filing: 19.08.2022
(51) Int. Cl.: B29C 45/17

(54) **OPERATION MANAGEMENT SYSTEM AND OPERATION MANAGEMENT METHOD FOR INJECTION MOLDING MACHINE**

(30) Priority: 15.02.2022 JP 2022021252
(71) Applicant: Nissei Plastic Industrial Co., Ltd., Hanishina-gun, Nagano 389-0693 (JP)
(72) Inventor: NISHIZAWA Chiharu, Hanishina-gun, Nagano 389-0693 (JP)
(74) Representative: Haseltine Lake Kempner LLP
(86) International application number: PCT/JP2022/031374
(87) International publication number: WO 2023/157347

(57) **Abstract**

Operation data Dm related to the operation state of an injection molding machine M are acquired, and the acquired operation data Dm are stored in a molding machine controller 2 at least temporarily. User data Du are created, and an information stored code Cm is created using a graphic pattern in which the user data Du are stored. The user data Du contain operation data Dmm in a predetermined period of time Tm, identification data Di for identifying the operation data Dmm, and a transmission destination URL, which is a transmission destination on the internet N to which the operation data Dmm and the identification data Di are to be transmitted. The created information stored code Cm is displayed on a display 3 appended to the molding machine controller 2.

## Description

### Technical Field

The present invention relates to an operation management system and an operation management method for an injection molding machine, which are preferably used when the operation state of the injection molding machine is managed.

### Background Art

Conventionally, management of the operation state for an injection molding machine has been performed in such a manner that production information, anomaly occurrence information, etc. are reported from the user side to the manager side (i.e., a corresponding management center, a technical center, etc.), and necessary supports are requested of the manager side. In such a case, in actuality, communication means, such as the internet (electronic mails) and a company's internal LAN system, are usually used as a transmission means used for communications when reports are submitted and supports are requested. A communication means and a communication method used in such a transmission means are known as disclosed in a molding machine controller described in Patent Document 1 and a troubleshooting method for an injection molding machine described in Patent Document 2.

An object of the controller described in Patent Document 1 is to provide a molding machine controller configured such that, when an event requiring notification occurs, the controller can make the event noticed even in a remote site. Specifically, the controller has a communication function section connected to an electric communication line and communicates with external terminals via the electric communication line. The controller includes a transmission destination designating means for designating beforehand a transmission destination to which occurrence of a predetermined event is automatically transmitted by a transmission means using the electric communication line when the predetermined event occurs in a molding machine; and an automatic distribution means for automatically distributing a notice about the occurrence of the predetermined event to the transmission destination designated by the transmission destination designating means, by the transmission means using the electric communication line, when the predetermined event occurs in the molding machine. The controller is configured to automatically transmit the notice about the occurrence of the predetermined event to the transmission destination designated by the transmission destination designating means, by the transmission means using the electric communication line, when the prescribed event occurs in the molding machine.

An object of the troubleshooting method described in Patent Document 2 is to allow an operator to cope with troubles precisely and smoothly (quickly) even when the operator is unfamiliar with an operation of a controller of the injection molding machine. Specifically, the troubleshooting method comprises the steps of: creating acquisition condition data, including a condition for acquiring operation signal data of the injection molding machine, which data corresponds to trouble information related to a trouble received from a user, from the controller of the injection molding machine, by using a data processing means provided in a technical center and having at the least a function of diagnosing troubles; sending the acquisition condition data to a communication terminal of the user by a communication means; causing the controller to read the acquisition condition data; acquiring the operation signal data on the basis of the acquisition condition data; and sending the acquired operation signal data to a communication terminal in the technical center by the communication means.

### Prior Art Publications

### Patent Publications

Patent Document 1: JP2004-157780A
Patent Document 2: JP2014-133378A

### Disclosure of the Invention

### Problem to be Solved by the Invention

However, the above-described conventional operation management methods in the field of injection molding machines have the following problems to be solved.

First, although the conventional methods can be used without any problem in, for example, a company in which some kind of a transmission system, such as a company's internal LAN system, is created, in the case where a sufficient transmission system has not been created (e.g., a small business or plant whose size is relatively small and which performs small lot production), in actuality, a user performs a transmitting process individually, by using facsimile, electronic mail, etc., on the basis of a piece of information displayed on, for example, a display of a molding machine controller or a piece of information which is printed out. Therefore, in such a small business or plant, the transmitting process requires time and labor, and operation management cannot be performed efficiently.

Second, transmission of information involves quite a few human operations, such as data output and input operations, and transmission may be performed via a plurality of media. Thus, human errors are likely to occur in the transmission of information. As a result, it is easy to cause a problem in which the contents are not transmitted accurately and reliably. In particular, when a problem occurs in an injection molding machine in operation, sufficient content (information) cannot be transmitted from the user side to the technical center, and therefore it is not easy to quickly and accurately troubleshoot the problem.

An object of the present invention is to provide an operation management system and an operation management method for an injection molding machine which have solved the problems present in the background art.

### Means for Solving the Problem

An operation management system 1 for an injection molding machine according to the present invention, which has solved the above-described problems, is a system for managing at least the operation state of an injection molding machine M.

The operation management system 1 comprises:
an operation data acquiring functional section Ft which acquires operation data Dm related to the operation state of the injection molding machine M and stores the acquired operation data Dm in a molding machine controller 2 mounted on the injection molding machine M so as to store the acquired operation data Dm at least temporarily;
a coding functional section Fc which creates user data Du and creates an information stored code Cm using a graphic pattern in which the user data Du are stored, the user data Du containing the operation data Dmm in a predetermined period of time Tm set beforehand, identification data Di for identifying the operation data Dmm, and a URL of a transmission destination on the internet N to which the operation data Dmm and the identification data Di are to be transmitted; and
a code displaying functional section Fd which displays the created information stored code Cm on a display 3 appended to the molding machine controller 2.

Meanwhile, an operation management method for an injection molding machine according to the present invention, which has solved the above-described problems, is a method for managing at least the operation state of an injection molding machine M.

The operation management method comprises:
a step of acquiring operation data Dm related to the operation state of the injection molding machine M and storing the acquired operation data Dm in a molding machine controller 2 mounted on the injection molding machine M so as to store the acquired operation data Dm at least temporarily;
a step of creating user data Du and creating an information stored code Cm using a graphic pattern in which the user data Du are stored, the user data Du containing the operation data Dmm in a predetermined period of time Tm set beforehand, identification data Di for identifying the operation data Dmm, and a URL of a transmission destination on the internet N to which the operation data Dmm and the identification data Di are to be transmitted;
a step of displaying the created information stored code Cm on a display 3 appended to the molding machine controller 2; and
a step of reading the displayed information stored code Cm by a code reading functional section Fr and transmitting the information stored code to the transmission destination URL by a transmission device 4 having at least a transmission function.

The preferred modes of the present invention are as follows. When the operation management system 1 is configured, a two-dimensional code Cmq may be contained in the information stored code Cm. In addition, at least production information Inp related to production and anomaly occurrence information Ine related to occurrence of an anomaly may be contained in the operation data Dm, and at least a molding machine number Inn, and the date and time Ind of creation of the information stored code Cm may be contained in the identification data Di. When the operation management method is implemented, a camera 11 having a photographing function may be used as the code reading functional section Fr, the user data Du may be reproduced from image data related to the information stored code Cm photographed by the camera 11, and the user data Du may be transmitted to the transmission URL by the transmission device 4. Moreover, the ULR of a cloud 12 may be used as the URL of the transmission destination, the user data Du are transmitted to the cloud 12 and registered in the cloud 12, and at least a computer terminal 13 on a manager side is enabled to download the user data Du by accessing the cloud 12.

### Effects of the Invention

The operation management system 1 and the operation management method according to the present invention yield the following remarkable effects.

(1) Since the operation management system 1 includes the coding functional section Fc which creates the information stored code Cm by using a graphic pattern in which the user data Du are stored, and the code displaying functional section Fd which displays the created information stored code Cm on the display 3 appended to the molding machine controller 2, the user can read the information stored code Cm without fail by one-touch operation by using a code reading function provided in any of various types of mobile devices such as a code reader, a smartphone with a camera, and a mobile phone with a camera. As a result, the user can easily transfer the various types of operation data Dm obtained in the injection molding machine M to the user's personal computer, mobile device, etc., thereby performing an accurate self-management process. In addition, since it becomes possible to easily transfer the various types of operation data Dm to a computer terminal or the like on the manager side, it is possible, even for a user in which a sufficient communication system has not been created, such as a relatively small business or a plant that performs small lot production, to reliably and quickly transmit the various types of operation data Dm. Thus, the operation management process related to the operation data Dm can be performed efficiently.
(2) Since there is almost no need for human processing operations associated with data input/output and conventional transmission methods in which transmission is likely to be performed via a plurality of media, occurrence of human errors can be avoided, and accurate information (content) can be transmitted. As a result, for example, even when a problem occurs in the molding machine, accurate information can be transmitted to the technical center in a short time, so that the troubleshooting can be performed quickly and appropriately.
(3) In a preferred mode in which the two-dimensional code Cmq is contained in the information stored code Cm, since QR codes (registered trademark), which are widely used in general, can be used, the two-dimensional code can be read easily and reliably with a code reader and application software that have been put into practical use, and a stable and reliable operation management system 1 can be constructed.
(4) In a preferred mode in which at least the production information Inp related to production and the anomaly occurrence information Ine related to occurrence of an anomaly are contained in the operation data Dm, since the operation data Dm can encompass necessary and important pieces of information to be transmitted, the operation management system 1 can be used as an operation management system most suitable for the injection molding machine M.
(5) In a preferred mode in which at least the molding machine number Inn and the date and time Ind of creation of the information stored code Cm are contained in the identification data Di, since the operation data Dm to be transmitted can be specified by a minimum amount of data, it can contribute to reducing the amount of data related to transmission processing, registration processing, etc.
(6) In a preferred mode in which the operation management method is implemented and in which the camera 11 having a photographing function is used as the code reading functional section Fr, the user data Du are reproduced from image data related to the information stored code Cm photographed by the camera 11, and the user data Du are transmitted to the transmission URL by the transmission device 4, since it is possible to use any of various types of mobile devices such as smartphones and notebook computers, which are widely used in general, it can be implemented as a versatile operation management method.
(7) In a preferred mode in which the operation management method is implemented and in which the URL of a cloud 12 is used as the transmission destination URL, the user data Du are transmitted to the cloud 12 and registered in the cloud 12, and at least a computer terminal 13 on a manager side is enabled to download the user data Du by accessing the cloud 12, since various types of clouds 12 on the internet N can be used, the user data Du can be widely used, by accessing them, by various managers of a management section, a technical center, etc.

### Brief Description of the Drawings

[Fig. 1] Flowchart used for describing the steps of an operation management method according to a preferred embodiment of the present invention.
[Fig. 2] System diagram showing the entirety of an operation management system according to the preferred embodiment of the present invention.
[Fig. 3] Diagram of functional blocks which constitute a main part of the operation management system.
[Fig. 4] View of a display screen portion within a dot-dash line circle A in Fig. 2, which view shows an example of a QR code (registered trademark) displayed on a display of a molding machine controller in the operation management system.
[Fig. 5] View of a display screen showing an example of user data displayed on a computer terminal on the manager side by the operation management method.
[Fig. 6] Enlarged view of a portion within a dot-dash line circle B in Fig. 5.

### Description of Reference Numerals

1: operation management system, 2: molding machine controller, 3: display, 4: transmission device, 11: camera, 12: cloud, 13: computer terminal, M: injection molding machine, Dm: operation data, Dmm: operation data in a predetermined period of time set beforehand, Du: user data, Di: identification data, Cm: information stored code, Ft: operation data acquiring functional section, Fc: coding functional section, Fd: code displaying functional section, Fr: code reading functional section, N: internet, Cmq: two-dimensional code, Inp: production information, Ine: anomaly occurrence information, Inn: molding machine number, Ind: date and time of creation

### Description of Reference Numerals

Next, the best embodiment according to the present invention will be described in detail based on the drawings.

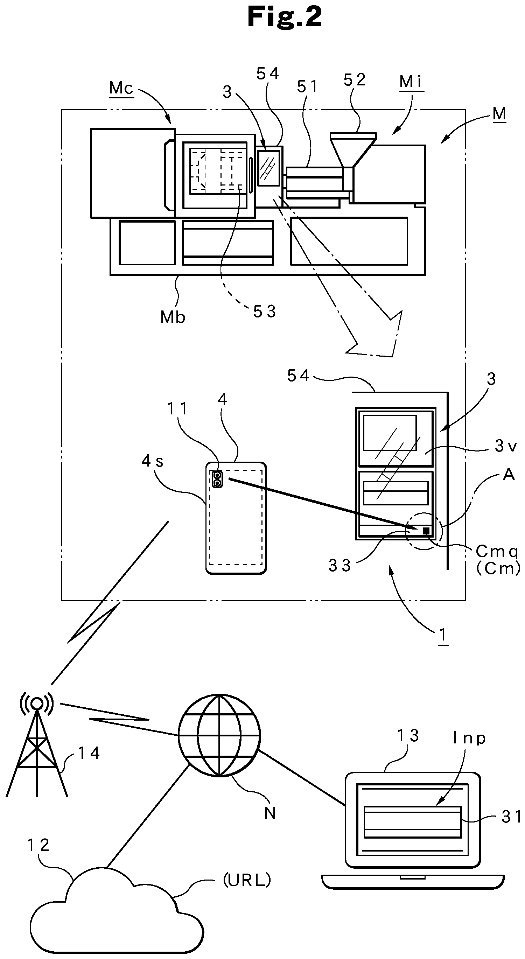

First, the entirety of an operation management system 1 according to the present embodiment will be described with reference to Figs. 2 to 6.

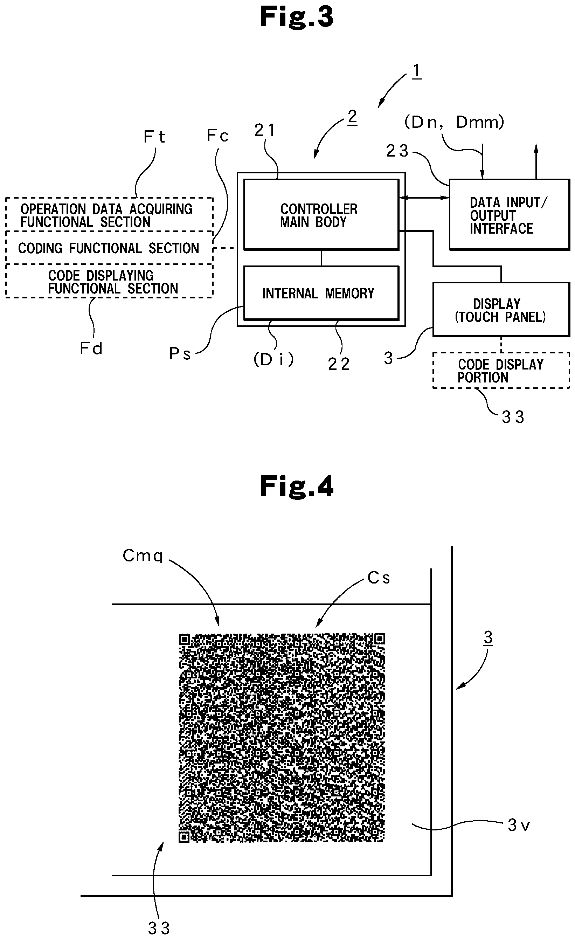

Fig. 2 is a system diagram showing the entirety of the operation management system 1. Fig. 3 is a diagram of functional blocks which constitute a main part of the operation management system 1.

In Fig. 2, reference symbol M denotes an injection molding machine. This injection molding machine M includes a machine base Mb and includes an injection apparatus Mi and a die clamping apparatus Mc, which are disposed on the machine base Mb. The injection apparatus Mi includes a heating cylinder 51, an unillustrated injection nozzle provided at a forward end of the heating cylinder 51, and a hopper 52 which is provided at a rear portion of the heating cylinder 51 and supplies a molding material. Meanwhile, the die clamping apparatus Mc includes a die 53 composed of a movable die and a stationary die. Also, a molding machine controller 2 (Fig. 3) is built in the machine base Mb, and a display 3 appended to the molding machine controller 2 is disposed by using a side panel 54 erected on the machine base Mb.

Fig. 3 shows the configuration of a main part of the molding machine controller 2 (a main part of the operation management system 1). The molding machine controller 2 includes a controller main body 21 which is composed of hardware (a CPU, etc.) and which has a computer function, and an internal memory 22 which is attached to the controller main body 21 and in which an SSD (solid state drive) or the like is used. For example, a liquid crystal display with a touch panel is used for the display 3, and the display 3 is connected to a display port of the controller main body 21. In addition, a data input/output interface 23 is provided, and the controller main unit 21 can input and output various types of data, including analog data and digital data, through the data input/output interface 23.

The internal memory 22 has a program area and a data area. Processing programs (pieces of software) Ps for executing various types of computing processes and various types of control processes, including a sequency control process, are stored in the program area. Various types of data, including data bases, can be written into the data area. In particular, the processing programs Ps include an application software program for realizing the operation management system 1 according to the present invention and constitute, in cooperation with the controller main body 21 having a computer function, major functional sections of the present invention; i.e., an operation data acquiring functional section Ft, a coding functional section Fc, and a code displaying functional section Fd.

The operation data acquiring functional section Ft has a function of acquiring operation data Dm related to an operation state of the injection molding machine M and storing the acquired operation data Dm in the internal memory 22 (the molding machine controller 2) so as to store the acquired operation data Dm at least temporarily. This operation data Dm includes at least production information Inp related to production and anomaly occurrence information Ine related to occurrence of an anomaly.

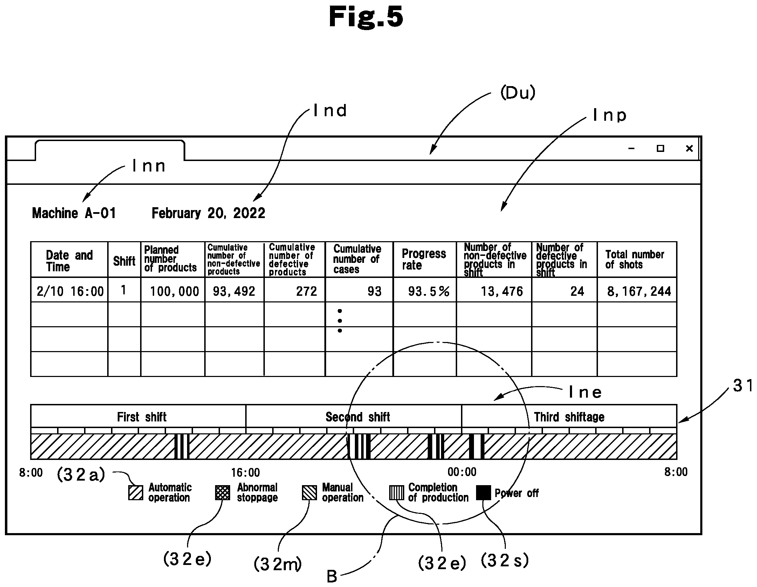

In this case, the production information Inp includes various types of information related to production. For example, as shown in a middle section of Fig. 5, it can include "shift," "planned number of products to be produced," "cumulative number of non-defective products," "cumulative number of defective products," "cumulative number of cases," "progress rate", "number of non-defective products in shift," "number of defective products in shift," and "total number of shots." Notably, "shift" shows a time zone of an alternative work schedule. The production information Inp can also include "molding weekly report," "molding monthly report," " occupancy rate display," "summary list of owned machines," etc.

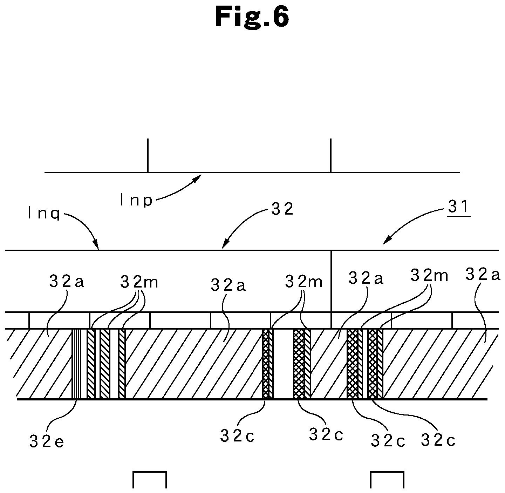

As shown in a lower section of Fig. 5 and Fig. 6 showing a portion of Fig. 5 in an enlarged scale, the anomaly occurrence information Ine can be represented, for example, by a graph (time chart) 31 visually showing the operation state of the molding machine in a single day. In particular, the anomaly occurrence information Ine can be shown by an "abnormal stoppage period (time) 32c" displayed by, for example, a red area along the time axis of the graph 31. In addition to that, an "automatic operation period 32a" (green area), a "manual operation period 32m" (gray area), a "production completion period 32e" (pink area), a "power OFF period 32s" (black area), etc. can be displayed in this graph 31.

In the case where, as described above, at least the production information Inp related to production and the anomaly occurrence information Ine related to occurrence of an anomaly are contained in the operation data Dm, since the operation data Dm can encompass necessary and important pieces of information to be transmitted, the operation management system 1 can be used as an operation management system most suitable for the injection molding machine M.

The coding functional section Fc has a function of creating user data Du, and creating an information stored code CM by using a graphic pattern in which the user data Du are stored. The user data Du contain the operation data Dmm in a predetermined period of time Tm set beforehand, identification data Di for identifying the operation data Dmm, and a transmission destination URL, which is a transmission destination on the internet N to which the operation data Dmm and the identification data Di are to be transmitted.

An example of the operation data Dmm in the predetermined period of time Tm is the operation data Dmm collected by setting the predetermined period of time Tm to "8:00 - 8:00"; i.e., the operation data Dmm collected for 24 hours after "8:00." A molding machine number Inn and the date and time Ind of creation of the information stored code Cm, which will be described later, may be contained in the identification data Di (see Fig. 5). In the case where, as described above, at least the molding machine number Inn and the date and time Ind of creation of the information stored code Cm are contained in the identification data Di, since the operation data Dm to be transmitted can be specified by a minimum amount of data, it can contribute to reducing the amount of data related to transmission processing, registration processing, etc. In the illustrated example, a predetermined cloud 12 is designated by the transmission destination URL, which is a transmission destination on the internet N to which the operation data Dmm and the identification data Di are to be transmitted.

The information stored code Cm created by using a graphic pattern enables storing a piece of information by the shape and position of a figure or the like, and reproducing the piece of information by scanning the shape or position. In general, it is possible to use any of various types of information stored codes Cm such as a bar code (a one-dimensional code), a two-dimensional code Cmq, and an original code which are created in accordance with a peculiar rule and which only a particular user can use.

The information stored code Cm used in the present embodiment is preferably a two-dimensional code Cmq, more preferably, a QR code (registered trademark) from the viewpoint of enabling storage of a sufficient amount of information. In the case where the two-dimensional code Cmq is used as described above, since QR codes (registered trademark), which are widely used in general, can be used, the information stored code Cm can be read easily and reliably with a code reader and application software that have been put into practical use, and a stable and reliable operation management system 1 can be constructed.

Accordingly, the coding functional section Fc performs a process of creating the above-described user data Du containing the operation data Dmm, the identification data Di, and the transmission destination URL, and creating a QR code (registered trademark) Cmq by converting the created user data Du by using a code creation program (application software). As a result, it is possible to create the information stored code Cm composed of the two-dimensional code Cmq by using a graphic pattern in which the user data Du are stored.

The code displaying functional section Fd has a function of displaying the created two-dimensional code Cmq in a code display portion 33 (Fig. 3) of the display 3, which is an empty area set beforehand. Figs. 2 to 4 show the state in which a QR code (registered trademark) Cmq, which is one example of the created two-dimensional code, is displayed in the code display portion 33 provided at a right lower position on the display screen 3v of the display 3.

As described above, the operation management system 1 for the injection molding machine according to the present embodiment comprises:
the operation data acquiring functional section Ft which acquires the operation data Dm related to the operation state of the injection molding machine M and stores the acquired operation data Dm in the molding machine controller 2 mounted on the injection molding machine M so as to store the acquired operation data Dm at least temporarily;
the coding functional section Fc which creates the user data Du and creates the two-dimensional code Cmq (the information stored code Cm) by using a graphic pattern in which the user data Du are stored, the user data Du containing the operation data Dmm in the predetermined period of time Tm set beforehand, the identification data Di for identifying the operation data Dmm, and the transmission destination URL (the transmission destination on the internet N) to which the operation data Dmm and the identification data Di are to be transmitted; and
the code displaying functional section Fd which displays the created two-dimensional code Cmq on the display 3 appended to the molding machine controller 2.

Therefore, the user (operator) can read the two-dimensional code Cmq by one-touch operation, without fail, by using a code reading function provided in any of various types of mobile devices such as a code reader, a smartphone with a camera, and a mobile phone with a camera.

As a result, the user (operator) can transfer the various types of operation data Dm obtained in the injection molding machine M to the user's personal computer, mobile device, etc., thereby performing an accurate self-management process. In addition, since it becomes possible to easily transfer the various types of operation data Dm to a computer terminal or the like on the manager side, it is possible, even for a user in which a sufficient communication system has not been created, such as a relatively small business or a plant that performs small lot production, to reliably and quickly transmit the various types of operation data Dm. Thus, the operation management process related to the operation data Dm can be performed efficiently.

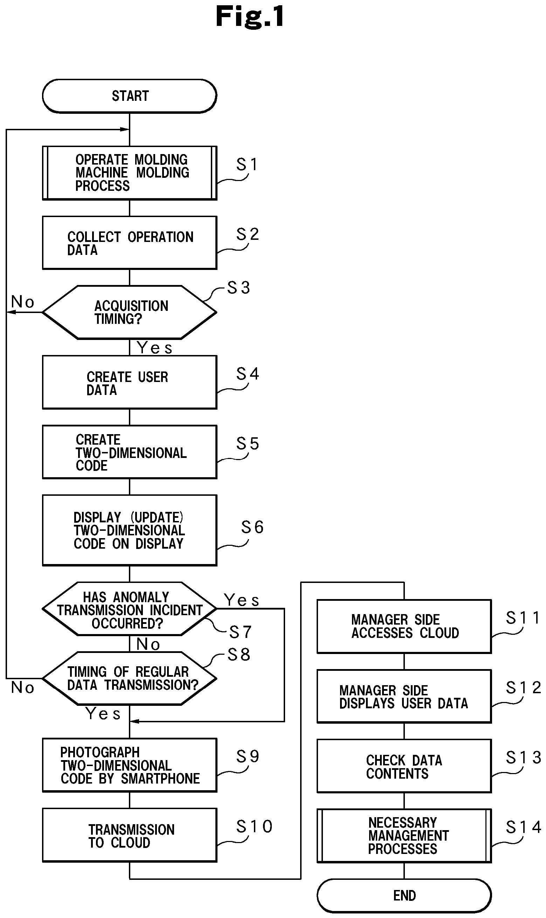

Next, an operation management method according to the present embodiment which uses the operation management system 1 will be described in accordance with the flowchart shown in Fig. 1 and with reference to other drawings.

Here, it is assumed that the injection molding machine M is operating in an automatic operation mode and production is performed normally by a predetermined molding process (step S1). In the molding machine controller 2 of the injection molding machine M, during molding operation, various types of data, including the operation data Dm related to the operation state of the injection molding machine M, are acquired by the controller main body 21 through the data input/output interface 23 (step S2). In this operation data Dm, at least the production information Inp and the anomaly occurrence information Ine described above are contained. In addition, a monitoring screen is displayed on the display 3, and the various types of data containing the operation data Dm are displayed.

Meanwhile, the acquired operation data Dm are written into the internal memory 22 by the operation data acquiring functional section Ft, whereby the acquired operation data Dm are stored at least temporarily. The operation data Dm are obtained, for example, at the timing of each shot, and pieces of necessary production information Inp; i.e., the above-described "cumulative number of non-defective products," "cumulative number of defective products," etc., are collected.

When an acquisition timing set beforehand has come, the operation data Dm, including the above-described pieces of production information Inp, are acquired (step S3). The acquisition timing can be set freely; for example, the acquisition may be performed in each shot or every two shots. In the embodiment, it is supposed that the operation data Dm are acquired in each shot. Notably, the operation data Dm acquired at this point in time contains intermediate pieces of production information Inp from the start of the predetermined period of time Tm (8:00) to this acquisition timing; namely, the acquired operation data Dm are operation data Dmm.

After acquisition of the operation data Dm, the coding functional section Fc creates user data Du, containing not only the operation data Dmm but also known identification data Di for identifying the operation data Dmm, and a known transmission destination URL (step S4). Moreover, the coding functional section Fc creates, from the created user data Du, an information stored code Cm, which is a two-dimensional code Cmq storing the user data Du; i.e., a QR code (registered trademark) (step S5).

After creation of the information stored code Cm by the coding functional section Fc, the code displaying functional section Fd displays the information stored code Cm in the code display portion 33 of the display 3 shown Figs. 2 to 4 or performs data update for the information stored code Cm displayed just before (step S6).

Here, it is assumed the case where a trouble has occurred during operation of the injection molding machine M; i.e., the case where an anomaly transmission incident has occurred and the injection molding machine M has stopped abnormally (step S7). In this case, the user (operator) usually performs an error-coping process such as inspection and resetting (readjusting) molding conditions. As shown in Figs. 5 and 6, this situation is added as the anomaly occurrence information Ine; specifically, added as an abnormal stoppage period (time) 32c on the graph 31. In the case where, after the injection molding machine M has stopped abnormally, the operator changes the molding conditions by manual operation (manual operation period 32m), these pieces of historical information are also added as the anomaly occurrence information Ine. Notably, in the anomaly occurrence information Ine, an error code and the details of the error are also contained.

Meanwhile, in the case where the injection molding machine M cannot recover to a normal state from an abnormal state despite of performance of the predetermined error-coping process, the operator can ask for the necessary support by contacting the technical center (the manager side).

In this case, the operator is only required to read the information stored code Cm (QR code (registered trademark)) displayed on the display 3 by using the transmission device 4. Specifically, as shown in Fig. 2, the operator photographs the information stored code Cm displayed in the code display portion 33 of the display 3 by using a camera 11 of a smartphone 4s, which serves as the transmission device 4 (step S9). Notably, it is assumed that the camera 11 is built in the smartphone 4s, and the smartphone 4s includes an application software program previously installed and realizing a transmitting and receiving function and the code reading functional section Fr for reading the QR code (registered trademark) Cmq.

As a result, the user data Du are reproduced from the image data of the information stored code Cm by the application software program in the smartphone 4s. Furthermore, when the operator clicks a transmission key of the smartphone 4s, the user data Du are transmitted to the transmission destination URL contained in the user data Du; i.e., are transmitted to the cloud 12 via the internet N, and the user data Du are registered in the cloud 12 (step S10). Notably, in Fig. 2, reference numeral 14 denotes a relay station for the smartphone 4s.

In the case where, as described above, the camera 11 having a photographing function is used as the code reading functional section Fr, and the user data Du are reproduced from the image data related to the information stored code Cm captured by the camera 11 are transmitted to the transmission URL by the transmission device 4, since it is possible to use any of various types of mobile devices such as smartphones and notebook computers, which are widely used in general, it can be implemented as a versatile operation management method.

In the illustrated example, since the computer terminal 13 is provided on the manager side (technical center), the technical center can download the user data Du by accessing the cloud 12 from the computer terminal 13 at constant intervals (step S 11).

In the case where a display program for displaying the user data Du is installed in the computer terminal 13 beforehand, the user data Du can be displayed as shown in Fig. 5. Namely, the production information Inp related to production can be displayed in a middle section of the monitor screen 30, and the anomaly occurrence information Ine related to occurrence of an anomaly can be displayed in a lower section of the monitor screen 30. In addition, the molding machine number Inn and the date and time Ind of creation of the information stored code Cm can be displayed in an upper section of the monitor screen 30 on the basis of the identification data Di (step S12).

in the technical center, the user data Du displayed on the monitor screen 30; in particular, the content of the anomaly occurrence information Ine can be checked (step S13). Then, on the basis of this anomaly occurrence information Ine, a necessary support process (management process) can be performed, such as dispatching a service person or informing necessary countermeasures by e-mail or telephone (step S14).

Meanwhile, in the case where the operation of the injection molding machine M continues normally without any support from the technical center mentioned above, the operation data Dm necessary for the manager side are regularly transmitted. In this case, when the timing for regular data transmission set beforehand has come, the same transmission process is performed for the cloud 12 (step S8). In general, the timing for regular data transmission is the end of operation hours (in the illustrated example, 8:00 to 8:00) in each day. Namely, at the end of the operating hours in each day, the operator photographs the information stored code Cm on the display 3 by using the camera 11 of the smartphone 4s (step S9). In this case, the user data Du stored in the information stored code Cm at this point in time includes the operation data Dmm during the predetermined period of time Tm set beforehand; namely, the operation data Dmm of one day (8:00 - 8:00), and the above-described identification data Di and the above-described transmission destination URL, which are added to the operation data Dmm.

As a result, the user data Du are reproduced from the image data of the information stored code Cm by the application software program in the smartphone 4s. When the operator clicks the transmission key of the smartphone 4s, the user data Du are transmitted to the transmission destination URL contained in the user data Du; i.e., are transmitted to the cloud 12 via the internet N, and the user data Du are registered in the cloud 12 (step S10). Notably, in the embodiment, the period of one day (8:00 - 8:00) is set as the predetermined period of time Tm. However, an arbitrarily determined period of time Tm, such as the time zone of a shift work of the plant, can be set.

Notably, it is assumed that the manager side in this case is a management section of a company or the like that manages the production information Inp. Therefore, the computer terminal 13 shown in Fig. 2 is a computer terminal disposed in the management section.

In the case where, as described above, the URL of the cloud 12 is applied as the transmission destination URL, the user data Du are transmitted to the cloud 12 and are registered therein, and at least by the computer terminal 13 on the manager side is enabled to download the user data Du by accessing the cloud 12, since various types of clouds 12 on the internet N can be used, the user data Du can be widely used, by accessing them, by various managers of the management section, the technical center, etc. Notably, the manager can access the cloud 12 at any time by entering an ID and a password, which are necessary to access the cloud 12.

Such an operation management method (operation management system 1) according to the present embodiment includes:
the step of acquiring the operation data Dm related to the operation state of the injection molding machine M and storing the acquired operation data Dm in the molding machine controller 2 of the injection molding machine M so as to store the acquired operation data Dm at least temporarily;
the step of creating the user data Du, which contains the operation data Dmm in the predetermined period of time Tm set beforehand, the identification data Di for identifying the operation data Dmm, and the transmission destination URL representing a transmission destination on the internet N to which the operation data Dmm and the identification data Di are to be transmitted, and creating the information stored code Cm by using a graphic pattern in which the user data Du are stored;
the step of displaying the created information stored code Cm on the display 3 appended to the molding machine controller 2; and
the step of reading the displayed information stored code Cm by the code reading functional section Fr and transmitting the information stored code Cm to the transmission destination URL by the transmission device 4 having at least a transmission function

Therefore, the user can read the information stored code Cm without fail by one-touch operation by using a code reading function provided in any of various types of mobile devices such as a code reader, a smartphone with a camera, and a mobile phone with a camera.

As a result, the user can easily transfer the various types of operation data Dm obtained in the injection molding machine M to the user's personal computer, mobile device, etc., thereby performing an accurate self-management process. In addition, since it becomes possible to easily transfer the various types of operation data Dm to a computer terminal or the like on the manager side, it is possible, even for a user in which a sufficient communication system has not been created, such as a relatively small business or a plant that performs small lot production, to reliably and quickly transmit the various types of operation data Dm. Thus, the operation management process related to the operation data Dm can be performed efficiently.

In addition, since there is almost no need for human processing operations associated with data input/output and conventional transmission methods in which transmission is likely to be performed via a plurality of media, occurrence of human errors can be avoided, and accurate information (content) can be transmitted. As a result, for example, even when a problem occurs in the molding machine, accurate information can be transmitted to the technical center in a short time, so that the troubleshooting can be performed quickly and appropriately.

The preferred embodiment has been described in detail. However, the present invention is not limited to such embodiment, and, as to structures of details, shapes, materials, quantities, numerical values, etc., alteration, addition, and deletion can be performed arbitrarily within a range not departing from the gist of the present invention.

For example, although there has been shown the case where both the production information Inp related to production and the anomaly occurrence information Ine related to occurrence of an anomaly are contained in the operation data Dm, only one of the production information Inp and the anomaly occurrence information Ine may be contained in the operation data Dm as needed. The operation data acquiring functional section Ft is only required to have a function of storing the operation data Dm in the molding machine controller 2 at least temporarily, and the operation data Dm may be stored continuously until the user performs a deletion process. The case where the molding machine number Inn and the date and time Ind of creation of the information stored code Cm are contained in the identification data Di has been shown as an example. However, other various types of identification data Di can be used so long as they are data which enable identification of the operation data Dmm. Although the two-dimensional code Cmq is desirably used as the information stored code Cm, a one-dimensional code (bar code) is not excluded. Although the case where a QR code (registered trademark) is used as the two-dimensional code Cmq has been shown as an example, it is possible to use any of various types of codes (original codes) which can be created by using graphic patterns in which the user data Du are stored. Although the camera 11 having a photographing function has been shown as an example of the code reading functional section Fr, various types of readers, such as a code reader, which have a code reading function can be used. It is sufficient for the transmission device 4 to have at least a transmission function, and the transmission device 4 may be a transmitting and receiving device. Although the URL of the cloud 12 is used as the transmission destination URL, the URLs of various types of computer terminals from which data can be directly received by the computer terminal 13 on the manager side can be used. The case where the operation data Dmm, the identification data Di, and the transmission destination URL are contained in the user data Du has been shown, it is possible to add other various types of data when necessary.

### Industrial Applicability

The operation management system and the operation management method according to the present invention can be used when the operation states of various types of injection molding machines are managed.

## Claims

1. An operation management system for an injection molding machine for managing an operation state of the injection molding machine, the operation management system being **characterized by** comprising:
an operation data acquiring functional section which acquires operation data related to at least the operation state of the injection molding machine and stores the acquired operation data in a molding machine controller mounted on the injection molding machine so as to store the acquired operation data at least temporarily;
a coding functional section which creates user data and creates an information stored code using a graphic pattern in which the user data are stored, the user data containing the operation data in a predetermined period of time set beforehand, identification data for identifying the operation data, and a URL of a transmission destination on the internet to which the operation data and the identification data are to be transmitted; and
a code displaying functional section which displays the created information stored code on a display attached to the molding machine controller.

2. An operation management system for an injection molding machine according to claim 1, wherein the information stored code includes a two-dimensional code.

3. An operation management system for an injection molding machine according to claim 1 or 2, wherein the operation data contain at least production information related to production and anomaly occurrence information related to occurrence of an anomaly.

4. An operation management system for an injection molding machine according to claim 1 or 2, wherein at least a molding machine number, and the date and time of creation of the information stored code are contained in the identification data.

5. An operation management method for an injection molding machine for managing an operation state of the injection molding machine, the operation management method being **characterized by** comprising:
a step of acquiring operation data related to at least the operation state of the injection molding machine and storing the acquired operation data in a molding machine controller mounted on the injection molding machine so as to store the acquired operation data at least temporarily;
a step of creating user data and creating an information stored code using a graphic pattern in which the user data are stored, the user data containing the operation data in a predetermined period of time set beforehand, identification data for identifying the operation data, and a URL of a transmission destination on the internet to which the operation data and the identification data are to be transmitted;
a step of displaying the created information stored code on a display attached to the molding machine controller; and
a step of reading the displayed information stored code by a code reading functional section and transmitting the information stored code to the transmission destination URL by a transmission device having at least a transmission function.

6. An operation management method for an injection molding machine according to claim 5, wherein the code reading functional section uses a camera having a photographing function, reproduces the user data from image data related to the information stored code photographed by the camera, and transmits the user data to the transmission URL by the transmission device.

7. An operation management method for an injection molding machine according to claim 5 or 6, wherein a URL of a cloud is used as the URL of the transmission destination, the user data are transmitted to the cloud and registered in the cloud, and at least a computer terminal on a manager side is enabled to download the user data by accessing the cloud.

8. An operation management method for an injection molding machine according to claim 5, 6, or 7, wherein the information stored code includes a two-dimensional code.
